(19) Europäisches Patentamt
European Patent Office
Office européen des brevets

(11) Numéro de publication: **0 052 391**
**B1**

(12) **FASCICULE DE BREVET EUROPEEN**

(45) Date de publication du fascicule du brevet: **18.07.84**

(21) Numéro de dépôt: **81201179.9**

(22) Date de dépôt: **26.10.81**

(51) Int. Cl.³: **B 01 D 57/02,**
G 01 N 27/26

(54) **Dispositif de fractionnement d'une solution par électrophorèse.**

(30) Priorité: **07.11.80 FR 8023952**

(43) Date de publication de la demande:
**26.05.82 Bulletin 82/21**

(45) Mention de la délivrance du brevet:
**18.07.84 Bulletin 84/29**

(84) Etats contractants désignés:
**AT BE CH DE FR GB IT LI LU NL SE**

(56) Documents cités:
**GB - A - 936 805**
**US - A - 2 801 962**
**US - A - 2 878 178**
**US - A - 3 870 617**
**US - A - 3 989 613**

**JOURNAL OF THE AMERICAN CHEMICAL SOCIETY, mai 1949, vol. 71, pages 1603-1608 GASTON (US) J.R. CANN et al.: "The Fractionation of Proteins by Electrophoresis-Convection. An Improved Apparatus and its Use in Fractionating Diphtheria Antitoxin."**

(73) Titulaire: **Etablissement Public dit: CENTRE NATIONAL DE LA RECHERCHE SCIENTIFIQUE (CNRS)**
**15, Quai Anatole France**
**F-75007 Paris (FR)**

(72) Inventeur: **Sanchez, Victor**
**1, rue Léonard de Vinci**
**F-31520 Ramonville Saint-Agne (FR)**
Inventeur: **Espenan, Patrick**
**Résidence Verlaine Impasse Delfour**
**F-31400 Toulouse (FR)**
Inventeur: **Casademont, Ernest**
**15, Lotissement Lespinet Baziege**
**F-31450 Montgiscard (FR)**
Inventeur: **Lafaille, Jean-Pierre**
**9, rue des Alisiers**
**F-31650 Saint-Orens (FR)**

(74) Mandataire: **Barre, Philippe**
**Cabinet Barre, Gatti, Laforgue 95, rue des Amidonniers**
**F-31069 Toulouse Cedex (FR)**

(56) Documents cités
**TRANSACTIONS AMERICAN SOCIETY ARTIFICIAL INTERNAL ORGANS, vol. XVI, 1970, pages 325-334 M. BIER et al.: "Selective Plasmapheresis in Dogs for Delay of Hetereograft Response."**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 052 391 B1**

## Description

L'invention concerne un dispositif en un procédé de fractionnement d'une solution en vue de séparer au moins deux groupes de substances dissoutes dans celle-ci; elle vise en dispositif et un procédé de fractionnement par électrophorèse, utilisant un champ électrique pour produire une migration des substances.

On a déjà utilisé en laboratoire l'électrophorèse pour fractionner une solution et obtenir des fractions liquides, enrichies en substances contenues dans la solution initiale; l'intérêt essentiel de ce type de procédé est qu'il conserve les propriétés spécifiques des substances fractionnées sans les dénaturer et également qu'il conduit à de faibles consommations énergétiques. On pourra en particulier se reporter au brevet FR—A—2 131 859 ou au brevet US—A—2 801 962 ou au brevet US—A—2 878 178 ou encore au brevet US—A—3 989 613 ou encore au brevet US—A—936 805 pour prendre connaissance de plusieurs modes de réalisation de dispositifs permettant la mise en oeuvre de tels procédés d'électrophorèse.

Toutefois, ces dispositifs ne permettent d'obtenir que des rendements relativement médiocres, les durées de fonctionnement nécessaires pour obtenir un taux de fractionnement donné étant souvent très longues.

Ainsi, en pratique, les dispositifs connus ne permettent pas de profiter pleinement des avantages que fournissent les procédés d'électrophorèse (faible consommation énergétique, absence de dénaturation de substances fractionnées) en raison des défauts inhérant à chacun de ces dispositifs, qui s'opposent à une mise en oeuvre industrielle. De plus, pour la plupart des dispositifs de fractionnement connus, il est nécessaire d'effectuer une préparation préalable de la solution initiale qui doit être diluée et dialysée, en général pour ajuster son pH, en vue d'autoriser un fractionnement efficace. Ces opérations de dialyse sont longues et délicates et sources de contaminations bactériennes des solutions.

La présente invention se propose de supprimer les défauts des dispositifs connus de fractionnement par électrophorèse, afin de permettre de profiter pleinement des avantages de l'électrophorèse.

Un objectif essentiel de l'invention est d'améliorer considérablement l'efficacité des dispositifs, de façon à atteindre des taux de fractionnement élevés avec des durées de fonctionnement relativement faibles, compatibles avec une mise en oeuvre à échelle industrielle.

Un autre objectif est de fournir un dispositif susceptible d'être fabriqué à faible coût.

Un autre objectif est de permettre d'effectuer le fractionnement en continu.

Un autre objectif est d'étendre les possibilités d'application des procédés de fractionnement par électrophorèse, grâce à l'amélioration considerable de l'efficacité des dispositifs conformes à l'invention.

Un autre objectif est d'éliminer radicalement toute étape préalable de dialyse ou toute autre préparation de type analogue.

A cet effet, le dispositif de fractionnement par électrophorèse visé par l'invention est du type comprenant des électrodes pour générer un champ électrique et, entre celles-ci, au moins deux membranes semi-perméables délimitant au moins une chambre de fractionnement dotée de moyens d'admission de la solution et de moyens de soutirage des fractions liquides; selon la présente invention chaque chambre de fractionnement est délimitée par un cadre périphérique pourvu d'une pluralité de languettes réunissant deux côtés dudit cadre et présentant la même épaisseur que celui-ci, les deux membranes semi-perméables étant appliquées, de part et d'autre, contre les faces dudit cadre et contre les faces desdites languettes de façon que lesdites membranes soient maintenues séparées d'une distance constante sur toute leur surface et que le volume compris entre lesdites membranes soit divisé par les languettes en une pluralité de volumes longiformes.

Les expérimentations ont permis de constater que le rendement de fractionnement est considérablement augmenté dans le dispositif de l'invention, essentiellement pour les raisons suivantes:

la structure de ce dispositif permet de limiter les zones mortes dans chaque chambre de fractionnement en canalisant l'écoulement dans des volumes relativement étroits,

cette structure permet également d'assurer un écoulement laminaire dans les chambres et d'éviter ainsi un remélange des substances séparées (provoqué dans les dispositifs connus par l'apparition de turbulences),

enfin, cette structure assure un excellent maintien des membranes sur toute leur surface et permet de rapprocher celles-ci avec un faible écart constant quelles que soient les zones considérées.

Comme on le comprendra mieux plus loin, ce dernier effet est essentiel en pratique, car non seulement il conditionne un meilleur échange entre les chambres de fractionnement voisines, mais encore et surtout, il donne la possibilité d'augmenter considérablement le rendement à l'intérieur de chaque chambre; en effet, les essais on montré que, pour des substances déterminées et des débits d'admission et de soutirage donnés, la courbe donnant les variations du rendement de fractionnement (ou encore du facteur de séparation) présente un maximum pointu pour une valeur déterminée de l'épaisseur des chambres; par exemple dans le cas d'une solution initiale contenant de l'albumine, qui est fractionnée pour obtenir une fraction enrichie en ce corps, la valeur maximum du facteur de

séparation est obtenue dans une plage d'épaisseur sensiblement comprise entre 0,15 et 0,40 cm en fonction des débits prévus.

L'invention s'étend à un procédé de fractionnement par électrophorèse au moyen du dispositif défini plus haut, en vue de réaliser un fractionnement de substances prédéterminées avec un débit d'admission et des débits de soutirage prédéterminés; selon ledit procédé, l'épaisseur de chaque cadre du dispositif et de ses languettes est choisie sensiblement égale à l'épaisseur optimale $e_c$ correspondant au maximum du facteur de séparation pour les substances et les débits envisagés.

Par ailleurs, selon une autre caractéristique de l'invention venant se combiner à celles déjà décrites, des compartiments de garde sont disposés entre chaque électrode et la chambre de fractionnement extrême correspondante; ces compartiments sont associés à des moyens d'alimentation en une solution auxiliaire et à des moyens d'évacuation de celle-ci. Ils sont délimités par un cadre muni de languettes analogues à celles déjà évoquées, la membrane du compartiment d'électrodes venant en appui contre une face dudit cadre et une face desdites languettes, cependant que la membrane de la chambre de fractionnement extrême vient en appui contre l'autre face dudit cadre et l'autre face desdites languettes. Les languettes dudit cadre sont disposées au droit des languettes des cadres des chambres de fractionnement, en vue de former des volumes longiformes situés en regard des volumes correspondants desdites chambres.

Ainsi, dans un tel dispositif, le champ électrique servant au fractionnement sert également à engendrer des échanges ioniques rapides à travers les membranes entre la solution initiale contenue dans les diverses chambres de fractionnement et la solution auxiliaire contenue dans les compartiments de garde. On supprime ainsi radicalement les opérations de préparation préalables, notamment de dialyse qui sont nécessaires dans certains dispositifs classiques, ainsi que tous les inconvénients afférents; de plus, la solution initiale n'a plus à être diluée et le procédé peut s'appliquer à des solutions naturelles dans l'état où elles sont produites ou recueillies. Par exemple, le procédé peut être appliqué directement à du sérum ou du plasma sanguin, ce qui écarte toutes les manipulations et précautions requises par l'etape de dilution.

Les caractéristiques essentielles de la solution initiale dont dépendent les différences de migrations entre substances sont constituées par son pH et sa concentration saline. En conséquence, la concentration et la nature des ions de la solution auxiliaire sont choisies dans chaque application de façon à réaliser des échanges ioniques aptes à conditionner un pH et une concentration saline adaptés de la solution initiale. Ce choix dépend des substances en présence et peut être effectué au terme de tests préalables avec plusieurs solutions auxiliaires contenant différents types d'ions à différentes concentrations et à différents pH. Par exemple, on peut utiliser les ions suivants: ions phosphates (ions de $Na_2\ HPO_4$, de $KH_2\ PO_4$, de $K_2\ H\ PO_4$, $Na\ H_2\ PO_4$...), ions carbonates, ions du barbital, ions acétates etc...

Le dispositif de l'invention permet une mise en oeuvre en continu de procédé d'électrophorèse, en effectuant une admission continue de la solution initiale et des prélèvements continus des fractions liquides et en engendrant une circulation de la solution auxiliaire à l'arrière de la ou des membranes semi-perméables correspondantes, de façon à renouveler ladite solution en continu en vue de préserver une concentration ionique sensiblement constante à ladite solution.

L'invention ayant été exposée dans sa forme générale, d'autres caractéristiques, buts et avantages, se dégageront de la description qui suit, laquelle fournit, en référence aux dessins annexés, d'une part, un mode de réalisation préférentiel du dispositif de l'invention, d'autre part, des exemples d'électrophorèse mis en oeuvre à l'aide dudit dispositif; sur ces dessins:

la figure 1 est une vue en perspective d'un dispositif conforme à l'invention,

la figure 2 en est une vue partielle en coupe par un plan vertical A,

la figure 3 est une vue schématique en perspective des éléments constitutifs qui délimitent une chambre de fractionnement, figure dans laquelle ces éléments constitutifs sont dessinés écartés les uns des autres pour en faciliter la compréhension,

la figure 4 est une coupe, à échelle très dilatée, de cette chambre en état de fonctionnement, par un plan vertical BB, avec schématisation symbolique du diagramme des vitesses de convection,

la figure 5 est une coupe de ladite chambre par un plan horizontal CC,

la figure 6 est une vue en perspective d'un cadre utilisé pour former un compartiment de garde,

la figure 7 est un schéma éclaté, montrant les circulations de liquide dans le dispositif,

les figures 8 à 13 donnent des spectres d'analyse illustrant les résultats obtenus dans les exemples de mise en oeuvre 1 à 5,

les figures 14 et 15 fournissent les courbes donnant le facteur de séparation en fonction de l'épaisseur des chambres de fractionnement dans les exemples 6 et 7.

Le dispositif représenté à titre d'exemple aux figures 1 à 7 comprend plusieurs chambres de fractionnement $C_1$, $C_2$, $C_3$ accolées, appelées à contenir la solution initiale à fractionner, deux compartiments de garde $G_1$, $G_2$ disposés de part et d'autre des deux chambres extrêmes et appelés à contenir une solution auxiliaire, et deux compartiments d'électrode $E_1$, $E_2$ disposés de part et d'autre des compartiments de garde et appelés à contenir une solution ionique.

Chaque chambre de fractionnement $C_1$, $C_2$, $C_3$ est délimitée sur deux grandes faces par deux membranes telles que 1 et 2 (fig. 2, 3, 4, 5) qui sont communes aux deux chambres voisines et

permettent de la séparer de celles-ci. En outre, chaque chambre est délimitée sur son pourtour par un cadre 3 contre lequel les membranes 1 et 2 sont appliquées étanchément. Ces cadres seront décrits en détail plus loin.

De façon analogue, chaque compartiment de garde $G_1$ ou $G_2$ est séparé, d'une part, de la chambre de fractionnement voisine par une membrane semi-perméable 4 identique à celles qui séparent les chambres, d'autre part du compartiment d'électrode voisin par une membrane semi-perméable 5 identique; en outre, chaque compartiment de garde est délimité sur son pourtour par un cadre 6 contre lequel les membranes 4 et 5 sont appliquées étanchément; ces cadres seront décrits en détail plus loin.

Chaque compartiment d'électrode $E_1$ ou $E_2$ est délimité sur ses grandes faces par la membrane semi-perméable 5 qui le sépare du compartiment de garde et par un panneau latéral 7 comportant sur une face interne un revêtement conducteur 8, formant l'électrode et connecté à une source électrique. Sur son pourtour, chaque compartiment d'électrode est délimité par un cadre 9 similaire au cadre 6 du compartiment de garde (à l'exception de lumières d'alimentation ou de prélèvement dont il est exempt).

En l'exemple, les membranes, cadres et panneaux latéraux sont de forme rectangulaire et forment un empilement guidé par des tiges telles que 10 et maintenu en pression par des plaques 11 et 12. L'une des plaques 12 est fixée à un support 13, cependant que l'autre 11 est mobile et est associée à un organe de serrage manuel classique 14 qui permet d'appliquer une pression entre les plaques pour assurer le maintien et l'étanchéïté de l'empilage.

Comme le représentent les figures 3, 4 et 5, le cadre 3 de chaque chambre de fractionnement $C_1$, $C_2$-est formé de deux panneaux identiques 15, 16 accolés étanchément l'un contre l'autre par une de leur face 15a, 16b; les membranes semi-perméables 1 et 2 qui séparent la chambre considérée des deux chambres voisines, viennent en pression contre les autres faces desdits panneaux 15b, 16a. Chacun de ces panneaux présente une épaisseur égale à celle de la moitié du cadre (et donc égale à la moitié de l'épaisseur de la chambre). Ces panneaux peuvent être réalisés en tout matériau diélectrique, neutre vis-à-vis des solutions initiales à traiter, par exemple en polyméthacrylate de méthyle.

Chaque panneau 15 ou 16 comprend sur une face 15a ou 16a un évidement 17 ou 18 s'étendant le long d'un côté de celui-ci (par exemple côté supérieur à la figure 3); il comprend sur la face opposée 15b ou 16b un évidement identique 19 ou 20 s'étendant le long du côté opposé (côté inférieur).

Un de ces évidements (par exemple 17) est appelé à jouer le rôle de canal d'admission de la solution initiale vers la zone active de la chambre, deux autres évidements, par exemple 18 et 19, étant appelés à jouer le rôle de canaux de soutirage (un évidement, (20), est en l'exemple inutilisé).

En outre, les panneaux, 15 et 16 formant chaque cadre sont chacun percés de quatre lumières en correspondance telles que 21. L'évidement supérieur de chaque panneau (17 ou 18) se prolonge jusqu'à l'une de ces lumières 21 sans communication avec l'autre lumière, cependant que l'évidement inférieur (19 ou 20) se prolonge jusqu'à la lumière située à l'opposé sans communication avec l'autre lumière.

Ces lumières permettront d'alimenter en parallèle, en solution initiale, les canaux d'admission des diverses chambres (formés par les évidements 17) et de prélever les fractions liquides à partir des canaux de soutirage de celles-ci (formés par les évidements 18 et 19). Pour permettre cette alimentation ou ce soutirage, chaque membrane semi-perméable est également percée de quatre lumières telles que 22 en correspondance avec les lumières 21.

De plus, chacun des deux panneaux 15 ou 16 formant un cadre 3 de chambre de fractionnement est pourvu de languettes parallèles, tels que 23, qui s'étendent verticalement d'un côté à l'autre du cadre jusqu'aux évidements de celui-ci; ces languettes 23 divisent ainsi le volume situé entre ces évidements en une pluralité de volumes longiformes, qui constituent les zones actives de la chambre. Ils permettent de diviser le flux de solution initiale en une pluralité de filets parallèles qui s'étendent entre les deux membranes 1 et 2 de la chambre considérée: l'admission de la solution initiale vers lesdits filets de même que le soutirage des fractions liquides à partir de ceux-ci s'effectuent en parallèles par les canaux formés par les évidements haut et bas.

Ces dispositions présentent l'avantage de limiter les zones mortes dans la chambre, en canalisant l'écoulement dans des volumes relativement étroits, ce qui accroît l'efficacité du fractionnement. De plus, les membranes semi-perméables viennent en appui contre les faces de languettes 23 et sont parfaitement maintenues sans risque de déformation sensible, ce qui permet de les disposer à des distances très précises les unes des autres, distances pouvant être très faibles (en pratique de l'ordre de 0,2 à 0,3 cm pour correspondre au maximum de rendement de séparation comme on le verra plus loin).

Par ailleurs, comme on peut l'apercevoir clairement à la figure 4 qui est une coupe transversale d'une chambre au niveau d'un des filets (coupe par un plan vertical BB perpendiculaire au cadre), les panneaux 15 et 16 qui constituent chaque cadre, forment des éléments de séparation 15c et 16c au niveau de chaque filet liquide, le long des deux côtés du cadre.

Un élément de séparation 16c sépare le canal d'admission supérieur formé par l'évidement 17 du canal de soutirage supérieur formé par l'évidement 18, cependant que l'autre élément de séparation 15c délimite le canal de soutirage inférieur formé par l'évidement 19.

En l'exemple, ces éléments de séparation 15c, 16c sont en forme de biseau comme le montre la figure 4 et sont dirigés depuis les zones de prélèvement 18 et 19 vers une zone intermédiaire Zi de la chambre où la vitesse de convection est très faible (On a représenté symboliquement à la figure 4 le

diagramme des vitesses de convection à l'intérieur d'un filet liquide).

Il est à noter en outre qu'un élément de diffusion divergent 15d, de structure identique aux éléments de séparation 15c ou 16c, est formé par le panneau 15 pour réaliser une entrée divergente de la solution initiale. Les panneaux 15 et 16 étant identiques, le panneau 16 porte un élément similaire 16d en bordure de son évidement 20, (qui n'a aucun rôle dans l'exemple décrit puisque aucun soutirage n'est réalisé à travers cet évidement 20).

Les dispositions ci-dessus décrites permettent de réaliser un cadre 3 trés bon marché, à partir de deux panneaux identiques (qui sont simplement accolés l'un sur l'autre après renversement et retournement à partir de leur position de superposition) et confèrent à chaque chambre $C_1$, $C_2$ un taux de fractionnement maximum (toute chose étant égale par ailleurs) provenant du réglage précis de l'épaisseur des chambres, des remélanges réduits entre fractions séparées et solution initiale, de l'absence de déformations des membranes semi-perméables et de la limitation des zones mortes.

Par ailleurs, la figure 6 présente un cadre 24 qui délimite chaque compartiment de garde $G_1$ et $G_2$. Ce cadre comprend des languettes 25 s'étendant verticalement d'un côté à l'autre de celui-ci au droit des languettes 23 des cadres 3 des chambres de fractionnement; ces languettes 25 définissent ainsi des volumes longiformes en regard des volumes actifs des chambres.

Le cadre 24 est en outre percé de moyens d'alimentation 27 pour alimenter en parallèles ces volumes longiformes en solution auxiliaire et de moyens d'évacuation 26 pour évacuer en parallèles la solution auxiliaire après circulation dans lesdits volumes.

En outre, il est percé de deux lumières coudées telles que 28; pour le cadre d'un des compartiments de garde ($G_1$), une de ces lumières correspond et communique avec les lumières d'alimentation (21, 22) en solution initiale des cadres et membranes des chambres de fractionnement, en vue de permettre l'alimentation des canaux d'admission desdites chambres, cependant que l'autre lumière coudée 28 correspond et communique avec les lumières de prélèvement en vue de recueillir une fraction liquide; pour le cadre de l'autre compartiment de garde ($G_2$) (cadre disposé en position retournée par rapport au premier), l'une de ces lumières correspond et communique avec les lumières de prélèvement de l'autre fraction liquide.

Le cadre disposé dans chaque compartiment d'électrode $E_1$, $E_2$ est similaire au cadre 24 ci-dessus décrit à l'exception des lumières 28 qui n'y sont pas prévues. Il permet de faire circuler une solution ionique éliminant les produits formés au contact des électrodes et de cantonner le champ électrique généré aux seules zones actives des chambres de fractionnement et compartiments de garde (situées entre leurs languettes).

La figure 7 schématise la circulation des divers liquides (une seule chambre de fractionnement étant représentée); on y retrouve les trajets de circulation:

de la solution initiale (en traits continus),

des deux fractions liquides séparées (en traits discontinus),

des solutions auxiliaires dans les deux compartiments de garde (en pointillés épais),

des solutions ioniques dans les deux compartiments d'électrodes (en pointillés fins).

Les exemples 1, 2, 3, 4 et 5 qui suivant sont destinés à illustrer les possibilités d'application du dispositif de l'invention ainsi que ses performances; les exemples 6 et 7 sont destinés à illustrer l'existence d'un maximum du facteur de séparation lorsqu'on fait varier l'épaisseur des chambres de fractionnement sans modification des autres paramètres.

Les exemples 1 à 5 ont été mis en oeuvre dans un dispositif du type ci-dessus décrit, avec les paramètres suivants:

nombre de chambre de fractionnement: 5

nombre de filets liquides entre languettes dans chaque chambre: 11,

surface active de chaque membrane: 60 cm2,

épaisseur d'une chambre: 3 mm,

solution ionique dans les compartiments d'électrode: même nature que la solution auxiliaire avec une concentration saline double.

Les débits d'alimentation et de soutirage formés ci-après sont des débits moyens rapportés à l'unité de largeur utile pour une membrane; ils sont exprimés en $cm^3$/heure/cm.

Exemple 1

Fractionnement d'un sérum sanguin bovin pour obtenir une fraction liquide riche en albumine et en $\alpha$ globulines

Cette fraction liquide a été obtenue par deux fractionnements successifs réalisés en deux étapes dans le dispositif.

Etape 1

La solution auxiliaire circulant dans les compartiments de garde est un mélange de $Na_2H$ $PO_4$—$KH_2PO_4$ à une concentration saline $C_T = 0{,}10$ M et à un pH = 6,00.

La solution initiale d'alimentation des chambres de fragmentation est du sérum bovin pur de pH compris entre 7,5 et 8 et de composition:

Concentration protéïque totale $C_{o\ total} = 75{,}00$ g/l

Albumine 29% $C_{oA} = 21{,}75$ g/l (concentration initiale en albumine)

$\alpha$-globulines 13% $C_{o\alpha} = 9{,}75$ g/l

$\beta$-globulines 13% $C_{o\beta} = 9{,}75$ g/l

$\gamma$-globulines 45% $C_{o\gamma} = 33{,}75$ g/l

Les conditions opératoires sont les suivantes:

$d = 3{,}8$ cm³/h.cm (débit d'alimentation en solution initiale)

$d_H = 3$ cm³/h.cm (débit de soutirage en partie haute des chambres de fractionnement),

$d_B = 0{,}8$ cm³/h.cm (débit de soutirage en partie basse)

$\Delta V_m = 5{,}50$ V (différence de potentiel entre les deux membranes extrêmes des chambres de fractionnement extrêmes),

I: 0,98A (intensité du courant traversant les chambres).

Les résultats de cette étape sont résumés dans le tableau I ci-après ($^{Q}/_{Qo}$ représente le rapport de la quantité de substance récupérée dans la fraction considérée à la quantité présente dans la solution initiale).

On constate que la solution provenant du bas de la cellule contient 49% d'albumine et 20% d'$\alpha$-globulines. L'énergie consommée pour traiter un litre de solution initiale est égale à 57 Watt-heure.

TABLEAU I

| Sortie / Fraction | BAS | | | HAUT | | |
|---|---|---|---|---|---|---|
| | Composition % | Concentration g/l | $^{Q}/_{Qo}$ % | Composition % | Concentration g/l | $^{Q}/_{Qo}$ % |
| Albumine | 49 | 98,16 | 95 | 5 | 2,16 | 2 |
| $\alpha$-globulines | 20 | 40,06 | 86 | 7 | 3,03 | 24 |
| $\beta$-globulines | 9 | 18,02 | 39 | 15 | 6,49 | 53 |
| $\gamma$-globulines | 23 | 46,07 | 29 | 73 | 31,57 | 74 |
| TOTAL | 100 | 202,31 | | 100 | 43,25 | |
| W = 57 Wh/l | | | | | | |

Etape 2

La seconde étape consiste en un fractionnement de la fraction liquide recueillie au bas des chambres au cours de l'étape 1. Cette fraction de concentration élevée (202,31 g/l), est diluée 7 fois avant traitement.

Conditions opératoires

solution auxiliaire circulant dans les compartiments de garde:

$Na_2HPO_4$—$KH_2PO_4$ $C_T = 0{,}10$ M pH = 6,00

solution d'alimentation des chambres de fractionnement:
fraction bas de l'étape 1 (diluée 7 fois dans une solution de $Na_2HPO_4$—$KH_2PO_4$ ($C_T$ = 0,10 M pH = 6,00) de composition:

$C_{o\ total} = 28{,}90$ g/l

Albumine 49% $C_{oA} = 14{,}02$ g/l

$\alpha$-globulines 20% $C_{o\alpha} = 5{,}72$ g/l

$\beta$-globulines 9% $C_{o\beta} = 2{,}57$ g/l

$\gamma$-globulines 23% $C_{o\gamma} = 6{,}58$ g/l

$d = 3{,}8$ cm$^3$/h.cm

$d_H = 3$ cm$^3$/h.cm

$d_B = 0{,}8$ cm$^3$/h.cm

$\Delta V_m = 6{,}13$ V

$I = 1{,}09$ A

L'examen du tableau I Bis ci-dessous qui résume les résultats obtenus, montre que l'on obtient des fractions riches en albumine (62%) et $\alpha$-globulines (23%). Sur l'ensemble des deux étapes, 70% de l'albumine et 58% des $\alpha$-globulines présentes dans la solution initiale sont récupérés dans les fractions bas.

TABLEAU I BIS

| Sortie / Fraction | BAS | | | HAUT | | |
|---|---|---|---|---|---|---|
| | Composition % | Concentration g/l | Q/Qo % | Composition % | Concentration g/l | Q/Qo % |
| Albumine | 62 | 49,61 | 74 | 30 | 4,51 | 25 |
| $\alpha$-globulines | 23 | 18,40 | 68 | 12 | 1,76 | 24 |
| $\beta$-globulines | 10 | 8,00 | 66 | 9 | 1,32 | 41 |
| $\gamma$-globulines | 5 | 4,00 | 13 | 49 | 7,39 | 89 |
| TOTAL | 100 | 80,01 | | 100 | 14,98 | |
| W = 70 Wh/l | | | | | | |

Exemple 2

Préparation de $\gamma$-globulines bovines

Conditions opératoires
solution auxiliaire circulant dans les compartiments de garde:

$Na_2HPO_4$—$KH_2PO_4$ pH = 6,00 $C_T = 0{,}10$ M

solution initiale d'alimentation des chambres de fractionnement:
sérum bovin pur, de composition:

$C_{o\ total} = 73,20$ g/l

Albumine 25% $C_{oA} = 18,30$ g/l

$\alpha$-globulines 20% $C_{o\alpha} = 14,64$ g/l

$\beta$-globulines 19% $C_{o\beta} = 13,91$ g/l

$\gamma$-globulines 36% $C_{o\gamma} = 16,35$ g/l

Activité biologique antitétanique T: 400 <T<450 U.I/ml

$d = 4,32$ cm³/h.cm

$d_H = dB = 2,16$ cm³/h.cm

$\Delta Vm = 10,79$ V

$I = 1,56$ A

Le tableau II indique que la fraction du haut des chambres ne renferme que des $\beta$ et $\gamma$-globulines. Si pour les $\gamma$-globulines la concentration dans cette fraction (31,10 g/l) est sensiblement identique à celle du sérum initial d'alimentation (26,35 g/l), pour les $\beta$-globulines, la concentration dans la fraction de haut (2,70 g/l) est bien plus faible que dans le sérum initial d'alimentation (13,91 g/l). Les $\beta$-globulines migrent donc vers l'anode, cette migration pouvant au moins partiellement justifier la perte d'activité biologique de l'échantillon du haut ($200 < T < 250$ U.I./ml) par rapport au sérum initial ($400 < T < 450$ U.I./ml). Notons que l'on récupère en haut des chambres 59% des $\gamma$-globulines de la solution initiale, les $\gamma$-globulines semblant ainsi migrer légèrement vers la cathode.

Les figures 8 et 9 présentent pour cet exemple les spectres de concentration obtenus par analyse sur acétate de cellulose (IST) respectivement pour la solution initiale (Fig. 8) et pour la fraction liquide prélevée en partie haute (Fig. 9). On observe la forte prédominance des $\gamma$-globulines, une faible concentration en $\beta$-globulines et des traces d'albumine (A) (peu faciles à distinguer sur ce spectre).

TABLEAU II

| Sortie / Fraction | BAS | | | HAUT | | |
|---|---|---|---|---|---|---|
| | Composition % | Concentration g/l | Q/Qo % | Composition % | Concentration g/l | Q/Qo % |
| Albumine | 34 | 37,01 | 101 | 0 | 0 | 0 |
| $\alpha$-globulines | 25 | 28,14 | 96 | 0 | 0 | 0 |
| $\beta$-globulines | 22 | 24,05 | 86 | 8 | 2,70 | 10 |
| $\gamma$-globulines | 19 | 21,13 | 40 | 92 | 31,10 | 59 |
| TOTAL | 100 | 110,33 | | 100 | 33,80 | |
| W = 155 Wh/l | | | | | | |
| Activité biologique "Haut" antitétanique 200 < T < 250 U.I./ml | | | | | | |

Exemple 3

Préparation de $\beta$ $\gamma$-globulines bovines
Conditions opératoires
solution auxiliaire circulant dans les compartiments de garde et solution initiale d'alimentation des chambres de fractionnement: identiques à celles de l'exemple 1.

$d = 3{,}8\ cm^3/h.cm$

$d_H = 3\ cm^3/h.cm$

$d_B = 0{,}8\ cm^3/h.cm$

$\Delta V_m = 4{,}50\ V$

$I = 0{,}89\ A$

Résultats et commentaires

Le tableau III qui résume les résultats obtenus, montre que la fraction obtenue à la sortie "Haut" des chambres est très riche en $\beta$-globulines (35%) et $\gamma$-globulines (44%). L'activité biologique de cette fraction ($300 < T < 400$ U.I./ml) est nettement supérieure à celle mesurée pour la fraction du haut de l'exemple 2 ($200 < T < 250$ U.I./ml). Cet accroissement pourrait être dû à la concentration relativement élevée des $\beta$-globulines présentes dans la fraction du haut (13,83 g/l contre 13,91 g/l dans la solution initiale). On récupère respectivement 78% et 52% des $\beta$-globulines et $\gamma$-globulines de la solution initiale d'alimentation.

La figure 10 présente le spectre de concentration de la fraction haut, obtenu par analyse sur acétate de cellulose et illustre la forte concentration en $\gamma$-globulines et $\beta$-globulines, avec une trace d'albumine.

TABLEAU III

| Sortie / Fraction | BAS | | | HAUT | | |
|---|---|---|---|---|---|---|
| | Composition % | Concentration g/l | Q/Qo % | Composition % | Concentration g/l | Q/Qo % |
| Albumine | 38 | 71,15 | 81 | 7 | 2,77 | 12 |
| $\alpha$-globulines | 26 | 48,68 | 70 | 14 | 5,53 | 30 |
| $\beta$-globulines | 9 | 16,85 | 26 | 35 | 13,83 | 78 |
| $\gamma$-globulines | 27 | 50,05 | 40 | 44 | 17,38 | 52 |
| TOTAL | 100 | 187,23 | | 100 | 39,50 | |
| W = 42 Wh/l | | | | | | |
| Activité biologique "Haut"<br>Antitétanique $300 < T < 400$ U.I./ml. | | | | | | |

Exemple 4 et Exemple 5

Préparation de $\beta\gamma$ globulines équines
Conditions opératoires
solution auxiliaire circulant dans les compartiments de garde:

$Na_2HPO_4—KH_2PO_4$ $C_T = 0{,}01$ M pH = 6,00

solution initiale d'alimentation des chambres de fractionnement: sérum équin pur de composition:

$C_{o\ total} = 58{,}60$ g/l

Albumine 41% $C_{oA} = 24{,}03$ g/l

$\alpha$-globuline 7% $C_{o\alpha} = 4{,}10$ g/l

$\beta\gamma$-globulines 52% $C_{o\beta\gamma} = 30{,}47$ g/l

Activités des antitoxines $\alpha$, $\beta$, $\varepsilon$, septique et oedémations:

$\alpha$ 300 U.I./ml

$\beta$ $300 < T < 350$ U.I./ml

$\varepsilon$ $10 < T < 15$ U.I./ml

septique $10 < T < 15$ U.I./ml

oedémations $25 < T < 50$ U.I./ml

$d = 2{,}4$ cm³/h.cm
$d_H = d_B = 1{,}2$ cm³/h.cm
} pour l'exemple 4

$d = 5{,}44$ cm³/h. cm
$d_H = d_B = 2{,}72$ cm³/h.cm
} pour l'exemple 5

$\Delta V_m = 9{,}12$ V
$I = 1{,}60$ A
} dans les deux exemples

Résultats et commentaires

Dans les tableaux IV (Exemple 4) et V (exemple 5) qui résument les résultats obtenus, on remarque pour les deux débits étudiés, que la fraction liquide s'écoulant du haut des chambres ne contient que des $\beta\gamma$-globulines. Cependant, le débit d'alimentation la plus élevé (5,44 cm³/h.cm) permet d'obtenir une fraction liquide plus concentrée (34,59 g/l) que le débit inférieur (2,4 cm³/h.cm) pour lequel la concentration est plus faible (21,92 g/l). La concentration en $\beta\gamma$-globulines de la fraction du haut de l'exemple 5 conduit à des titres d'activité biologique relativement élevés, et souvent proches du sérum initial d'alimentation. La figure 11 présente pour ces exemples, le spectre de concentration de la solution initiale, obtenu par analyse sur acétate de cellulose; la figure 12 présente le spectre de concentration de la fraction liquide haut obtenue dans l'exemple 4 et la figure 13 la spectre de concentration de la fraction liquide haut obtenu dans l'exemple 5. Une faible trace d'albumine est observée pour les deux échantillons analysés. On note d'autre part une forte concentration en $\beta$-globulines pour la fraction haute de l'exemple 5, concentration qui doit certainement être mise en relation avec l'activité biologique élevée de cette fraction.

TABLEAU IV

| Sortie / Fraction | BAS | | | HAUT | | |
|---|---|---|---|---|---|---|
| | Composition % | Concentration g/l | Q/Qo % | Composition % | Concentration g/l | Q/Qo % |
| Albumine | 50 | 47,50 | 98 | 0 | 0 | 0 |
| $\alpha$-globulines | 10 | 9,00 | 110 | 0 | 0 | 0 |
| $\beta\gamma$-globulines | 40 | 37,20 | 61 | 100 | 21,92 | 36 |
| TOTAL | 100 | 93,70 | | 100 | 21,92 | |
| W = 243 Wh/l | | | | | | |
| Activité biologique "haut"<br>$\alpha$ 150 à 200<br>$\beta$ 150<br>$\epsilon$ 4 < T < 10<br>Sept 5 < T < 10<br>Oed 20 < T < 30 U.I./ml | | | | | | |
| d = 2,4 $cm^3$/h.cm | | | | | | |

TABLEAU V

| Sortie / Fraction | BAS | | | HAUT | | |
|---|---|---|---|---|---|---|
| | Composition % | Concentration g/l | Q/Qo % | Composition % | Concentration g/l | Q/Qo % |
| Albumine | 57 | 48,20 | 100 | 0 | 0 | 0 |
| α-globulines | 11 | 9,00 | 109 | 0 | 0 | 0 |
| βγ-globulines | 32 | 27,23 | 45 | 100 | 34,59 | 57 |
| W = 107 Wh/l | | | | | | |
| Activité biologique "haut"<br>α 200 < T < 300<br>β 250<br>ε 5 < T < 10<br>Sept 5<br>Oea 20 < T < 30 | | | | | | |
| d = 5,44 $cm^3$/h.cm | | | | | | |

Exemple 6 et 7

Ces exemples ont été mis en oeuvre avec des dispositifs de type précédemment décrits dans lesquels l'épaisseur des cadres et donc les distances entre membranes ont été amenées à varier; pour chaque exemple, la courbe de variation du facteur de séparation en fonction de la distance entre membranes a été tracée (figures 14 et 15).

L'exemple 6 a été mené dans les conditions suivantes:

solution initiale constituée par une solution d'albumine à 0,3 g/l dans un mélange de $Na_2HPO_4$—$KH_2PO_4$ de concentration 0,10 M (pH = 7)

solution auxiliaire constituée par le mélange précité

débit d'alimentation: 5,6 $cm^3$/h.cm

débit de soutirage haut: 2,8 $cm^3$/h.cm

débit de soutirage bas: 2,8 $cm^3$/h.cm

champ électrique: 1 volt par cm

La courbe de la figure 14 montre que le facteur de séparation (c'est-à-dire le rapport de la concentration en albumine de la fraction basse à la concentration en albumine de la fraction haute) présente un maximum pointu pour une distance entre membrane égale à 0,25 cm.

Il est donc essentiel en pratique de se placer dans les conditions du maximum, qui dépendent des débits et de la nature des substances. Dans chaque application particulière visant à fractionner des substances données, l'ajustement des conditions optimales pourra être réalisé en fabriquant des cadres ayant une épaisseur donnée (comprise en pratique dans une fourchette de 0,15 à 0,40 cm) et en faisant varier les débits d'alimentation et de soutirage jusqu'à se placer dans la zone du maximum; dans le cas où ces débits seraient imposés par les conditions particulières de mise en oeuvre de l'application, des essais préalables seront effectués en laboratoire avec des dispositifs ayant des épaisseurs de cadres différentes, de façon à tracer la courbe donnant le facteur de séparation en fonction de cette épaisseur. Le dispositif définitif sera réalisé en choisissant l'épaisseur correspondant au maximum de cette courbe.

L'exemple 7 a été mené dans des conditions similaires à celles de l'exemple précédent mais avec des débits différents:

débit d'alimentation: 12,8 $cm^3/h.cm$

débit de soutirage haut: 6,4 $cm^3/h.cm$

débit de soutirage bas: 6,4 $cm^3/h.cm$

On constate que le maximum est toujours aussi prononcé et qu'il s'est légèrement déplacé; il est obtenu dans ce cas pour une distance entre membrane égale à 0,3 cm.

**Revendications**

1. Dispositif de fractionnement, par électrophorèse, permettant de fractionner au moyen d'un champ électrique une solution contenant au moins deux groupes de substances dissoutes en vue d'obtenir au moins deux fractions liquides, l'une enrichie dans le premier groupe de substances, l'autre enrichie dans le deuxième groupe, ce dispositif comprenant des électrodes (8) pour générer un champ électrique et, entre celles-ci, au moins deux membranes semi-perméables (1, 2) délimitant au moins une chambre de fractionnement ($C_1$...) dotée de moyens d'admission de la solution (17) et de moyens de soutirage des fractions liquides (18, 19), ledit dispositif étant caractérisé en ce que chaque chambre de fractionnement ($C_1$...) est délimitée par un cadre périphérique (3) pourvu d'une pluralité de languettes (23) reunissant deux côtés dudit cadre et présentant la même épaisseur que celui-ci, les deux membranes semi-perméables (1, 2) étant appliquées, de part et d'autre, contre les faces dudit cadre et contre les faces desdites languettes de façon que lesdites membranes soient maintenues séparées d'une distance constante sur toute leur surface et que le volume compris entre lesdites membranes soit divisé par les languettes (23) en une pluralité de volumes de forme allongée.

2. Dispositif selon la revendication 1 pour le fractionnement d'une solution initiale contenant de l'albumine en vue d'obtenir une fraction enrichie en ce corps, caractérisé en ce que l'épaisseur de chaque cadre (3) et de ses languettes (23) est sensiblement comprise entre 0,15 cm et 0,40 cm.

3. Dispositif de fractionnement selon l'une des revendications 1 ou 2, caractérisé en ce que les moyens d'admission de la solution et moyens de soutirage des fractions dans chaque chambre de fractionnement comprennent des évidements (17, 18, 19) ménagés le long des deux côtés du cadre (3), qui sont réunis par les languettes (23), les volumes de forme allongée séparés par lesdites languettes s'étendant entre lesdits évidements de façon que l'alimentation vers lesdits volumes de même que le soutirage à partir de ceux-ci soient réalisés en parallèles à travers lesdits évidements.

4. Dispositif de fractionnement selon la revendication 3, caractérisé en ce que chaque cadre (3) porte des éléments de séparation (15c, 16c) situés, d'une part, le long d'un côté dudit cadre, pour séparer l'évidement d'admission (17) et l'évidement de soutirage (19), d'autre part, le long du côté opposé, pour délimiter l'évidement de soutirage (18) au voisinage de la première membrane (1).

5. Dispositif de fractionnement selon l'une des revendications 3 ou 4, constitué par une pluralité de membranes (1, 2,...) et de cadres (3) appliqués étanchément les uns contre les autres pour former plusieurs chambres de fractionnement ($C_1$, $C_2$, $C_3$...), caractérisé en ce que les évidements d'admission (17) et évidements de soutirage (18, 19) des diverses chambres sont respectivement reliés entre eux en parallèle par des lumières (21, 22) pratiquées dans l'épaisseur desdits cadres et membranes.

6. Dispositif de fractionnement selon l'une des revendications 1, 2, 3, 4 ou 5, caractérisé en ce que chaque cadre (3) disposé entre deux membranes (1, 2) est formé par deux panneaux identiques (15, 16) accolés étanchément l'un contre l'autre et présentant chacun une épaisseur égale à la moitié de celle du cadre, chaque panneau (15, 16) comprenant, d'une part, sur une face, un évidement (17, 18) s'étendant le long d'un côté de celui-ci, d'autre part, sur sa face opposée, un évidement identique (19, 20) s'étendant le long du côté opposé dudit panneau, de façon à former les évidements d'admission et évidements de soutirage lorsque les panneaux (15, 16) sont accolés, les languettes (23) du cadre (3) étant formées par des éléments d'épaisseur moitié qui s'étendent entre les deux côtés sus-évoqués des panneaux, ces éléments étant agencés pour s'accoler deux à deux lors de l'accolement desdits panneaux.

7. Dispositif de fractionnement selon l'une des revendications 1, 2, 3 ou 4, 5 ou 7, comprenant entre chaque électrode (8) et la chambre de fractionnement extrême correspondante, un compartiment de garde ($G_1$, $G_2$) associé à des moyens d'alimentation (27) en une solution auxiliaire et à des moyens d'évacuation (26) de celle-ci, chaque compartiment de garde étant délimité par un cadre (24) contre les faces opposées duquel viennent en appui, d'une part, une membrane (5) du compartiment d'électrode, d'autre part, une membrane (4) de la chambre de fractionnement extrême, ledit dispositif étant caractérisé en ce que chaque cadre (24) sus-évoqué comprend des languettes (25) s'étendant d'un côté à l'autre de celui-ci au droit des languettes (23) des cadres (3) de la ou des chambres de fractionnement ($C_1$, $C_2$...) en vue de former des volumes de forme allongée situés en regard des volumes correspondants desdites chambres, ledit cadre (24) étant percé de moyens d'alimentation (27) pour alimenter en parallèle ces volumes en solution auxiliaire et de moyens d'évacuation (26) pour évacuer en parallèle la solution après circulation dans lesdits volumes.

8. Procédé de fractionnement par électrophorèse au moyen d'un dispositif conforme à la revendication 1, en vue de réaliser un fractionnement de substances de natures prédéterminées avec un débit d'admission

et des débits de soutirage prédéterminés, caractérisé en ce que l'épaisseur de chaque cadre (3) du dispositif et de ses languettes (23) est choisie sensiblement égale à l'épaisseur optimale $e_c$ correspondant au maximum du facteur de séparation pour les substances et les débits envisagés.

**Claims**

1. Apparatus for fractionation by electrophoresis, which enables a solution, containing at least two groups of dissolved substances, to be fractionated by means of an electric field, with a view to obtaining at least two liquid fractions, one enriched in the first group of substances, the other enriched in the second group, this apparatus comprising electrodes (8) for generating an electric field and, between the electrodes, at least two semi-permeable membranes (1, 2), which bound at least one fractionating chamber ($C_1$ . . .), equipped with means for the inlet of the solution (17) and means for the discharge of the liquid fractions (18, 19), said apparatus being characterised in that each fractionating chamber ($C_1$ . . .) is bounded by a peripheral frame (3), provided with a plurality of tongues (23) which join the two sides of said frame and have the same thickness as the latter, the two semi-permeable membranes (1, 2) being applied on either side against the surfaces of said frame and against the surfaces of said tongues, so that said membranes are kept separated by a constant distance over their entire surface and the volume between said membranes is divided by the tongues (23) into a plurality of volumes of elongate shape.

2. Apparatus according to Claim 1 for the fractionation of an albumen-containing starting solution, with a view to obtaining a fraction enriched in this substance, characterised in that the thickness of each frame (3) and of its tongues (23) lies approximately between 0.15 cm and 0.40 cm.

3. Fractionating apparatus according to either Claim 1 or 2, characterised in that the means for the inlet of the solution and means for the discharge of the fractions in each fractionating chamber comprise grooves (17, 18, 19), made along the two sides of the frame (3), which are joined by the tongues (23), the volumes of elongate shape, separated by said tongues, extending between said grooves, so that the feeding into said volumes as well as the discharge from the latter are effected, side by side, through said grooves.

4. Fractionating apparatus according to Claim 3, characterised in that each frame (3) carries separating elements (15c, 16c), situated, on the one hand, along one side of said frame for separating the inlet groove (17) and the discharge groove (19), and, on the other hand, along the opposite side for bounding the discharge groove (18) close to the first membrane (1).

5. Fractionating apparatus according to either Claim 3 or 4, consisting of a plurality of membranes (1, 2, . . .) and frames (3), tightly applied against one another, so as to form several fractionating chambers ($C_1$, $C_2$, $C_3$ . . .), characterised in that the inlet grooves (17) and the discharge grooves (18, 19) of the various chambers are respectively connected to one another, side by side, by ports (21, 22), made in the depth of said frames and membranes.

6. Fractionating apparatus according to one of the Claims 1, 2, 3, 4 or 5, characterised in that each frame (3), placed between two membranes (1, 2) is formed by two identical panels (15, 16), tightly coupled together, each having a thickness equal to half that of the frame and each panel (15, 16) comprising, on the one hand, on one surface, a groove (17, 18) extending along one side of the latter and, on the other hand, on its opposite surface, an identical groove (19, 20) extending along the opposite side of said panel, so as to form the inlet grooves and discharge grooves when the panels (15, 16) are coupled, the tongues (23) of the frame (3) being formed by elements of half the thickness, which extend between the two above-mentioned sides of the panels, these elements being designed for being coupled in pairs during the coupling of said panels.

7. Fractionating apparatus according to one of the Claims 1, 2, 3, 4, 5 or 6, comprising, between each electrode (8) and the corresponding farthest fractionating chamber, a protective compartment ($G_1$, $G_2$), associated with feeding means (27) for an auxiliary solution and with emptying means (26) for the latter, each protective compartment being bounded by a frame (24) from the opposite surfaces on which a membrane (5) of the electrode compartment, on the one hand, and a membrane (4) of the farthest fractionating chamber, on the other hand, are supported, said apparatus being characterised in that each above-mentioned frame (24) comprises tongues (25) extending from one side to the other of the latter, at right angles to the tongues (23) of the frames (3) of the fractionating chamber or chambers ($C_1$, $C_2$ . . .), so as to form volumes of elongate shape, situated so as to face the corresponding volumes of said chambers, said frame (24) being penetrated by feeding means (27) for feeding these volumes, side by side, with auxiliary solution and emptying means (26) for emptying the solution, side by side, after circulating through said volumes.

8. Process for the fractionation by electrophoresis by means of an apparatus according to Claim 1, with a view to effecting fractionation of substances of predetermined nature at a predetermined inlet flow rate and predetermined discharge flow rates, characterised in that the thickness of each frame (3) of the apparatus and of its tongues (23) is chosen such as to be approximately equal to the optimum thickness $e_c$, corresponding to the maximum of the separation factor for the substances and flow rates in question.

**Patentansprüche**

1. Vorrichtung zur Fraktionierung durch Elektrophorese, welche es ermöglicht, eine mindestens zwei Gruppen gelöster Stoffe enthaltende Lösung mittels eines elektrischen Feldes zu fraktionieren, um mindestens zwei flüssige Fraktionen zu erhalten, von denen die eine an der ersten Stoffgruppe angereichert und die andere an der zweiten Gruppe angereichert ist, wobei diese Vorrichtung Elektroden (8) zur Erzeugung eines elektrischen Feldes und zwischen diesen mindestens zwei halbdurchlässige Membranen (1, 2) umfasst, welche mindestens eine mit Mitteln zum Einlass der Lösung (17) und Mitteln zur Abführung der flüssigen Fraktionen (18, 19) ausgerüstete Fraktionierkammer ($C_1$...) begrenzen, wobei die besagte Vorrichtung dadurch gekennzeichnet ist, dass die Fraktionierkammern ($C_1$...) jeweils durch einen Umfangsrahmen (3) begrenzt sind, welcher mit einer Mehrzahl von die beiden Seiten des besagten Rahmens verbindenden und die gleiche Stärke wie dieser aufweisenden Leisten (23) versehen ist, wobei die beiden halbdurchlässigen Membranen (1, 2) beiderseits gegen die Flächen des besagten Rahmens und gegen die Flächen der besagten Leisten so angebracht werden, dass die besagten Membranen auf gleichbleibendem Abstand über ihre gesamte Oberfläche voneinander getrennt gehalten werden und dass der zwischen den besagten Membranen liegende Raum durch die Leisten (23) in eine Mehrzahl von länglichen Räumen aufgeteilt wird.

2. Vorrichtung nach Anspruch 1 zur Fraktionierung einen albuminhaltigen Ausgangslösung zur Herstellung einer an diesem Stoff angereicherten Fraktion, dadurch gekennzeichnet, dass die Stärke des jeweiligen Rahmens (3) und seiner Leisten (23) etwa zwischen 0,15 cm und 0,40 cm liegt.

3. Fraktioniervorrichtung nach einem der Ansprüche 1 oder 2, dadurch gekennzeichnet, dass die Mittel zum Einlass der Lösung und Mittel zur Abführung der Fraktionen in der jeweiligen Fraktionierkammer Nuten (17, 18, 19) umfassen, welche entlang der beiden Seiten des Rahmens (3) eingelassen und durch die Leisten (23) in Verbindung gebracht sind, wobei die durch die besagten Leisten getrennten länglichen Räume sich zwischen den besagten Nuten so erstrecken, dass der Zufluss zu den besagten Räumen sowie der Abfluss aus diesen nebeneinander durch die besagten Nuten vorgenommen wird.

4. Fraktioniervorrichtung nach Anspruch 3, dadurch gekennzeichnet, dass der jeweilige Rahmen (3) Scheideelemente (15c, 16c) trägt, welche einerseits entlang einer Seite des besagten Rahmens liegen, um die Einlassnut (17) und die Abflussnut (19) zu trennen, und andererseits entlang der entgegengesetzten Seite, um die Abflussnut (18) in der Nähe der ersten Membrane (1) zu begrenzen.

5. Fraktioniervorrichtung nach einem der Ansprüche 3 oder 4, welche aus einer Mehrzahl von Membranen (1, 2...) und Rahmen (3) besteht, die zur Bildung mehrerer Fraktionierkammern ($C_1$, $C_2$, $C_3$...) dicht aneinander gebracht sind, dadurch gekennzeichnet, dass die Einlassnuten (17) und Abflussnuten (18, 19) der verschiedenen Kammern jeweils miteinander durch in die Tiefe der besagten Rahmen und Membranen eingelassene Öffnungen (21, 22) nebeneinander in Verbindung gebracht werden.

6. Fraktioniervorrichtung nach einem der Ansprüche 1, 2, 3, 4, 5 oder 6, dadurch gekennzeichnet, dass der jeweilige, zwischen zwei Membranen (1, 2) liegende Rahmen (3) durch zwei gleiche, dicht aneinander gekuppelte Scheiben (15, 16) gebildet wird, welche jeweils die halbe Stärke des Rahmens aufweisen, wobei die Scheiben (15, 16) jeweils einerseits auf einer Fläche eine sich entlang einer Seite derselben erstreckende Nut (17, 18) und andererseits auf ihrer entgegengesetzten Fläche eine gleiche, sich entlang der entgegengesetzten Seite der besagten Scheibe erstreckende Nut (19, 20) so umfassen, dass sie die Einlassnuten und Abflussnuten bilden, wenn die Scheiben (15, 16) gekuppelt sind, wobei die Leisten (23) des Rahmens (3) durch Elemente mit halber Stärke gebildet werden, welche sich zwischen den beiden vorgenannten Seiten der Scheiben erstrecken, wobei diese Elemente zur paarweisen Kupplung bei der Kupplung der besagten Scheiben eingerichtet sind.

7. Fraktioniervorrichtung nach einem der Ansprüche 1, 2, 3, 4, 5 oder 6, umfassend zwischen der jeweiligen Elektrode (8) und der entsprechenden äussersten Fraktionierkammer eine Schutzabteilung ($G_1$, $G_2$), welche Einspeisemitteln (27) für eine Zusatzlösung und Entleermitteln (26) für diese zugeordnet ist, wobei die jeweilige Schutzabteilung durch einen Rahmen (24) begrenzt ist, an dessen gegenüberliegenden Flächen sich einerseits eine Membrane (5) der Elektrodenabteilung und andererseits eine Membrane (4) der äussersten Fraktionierkammer abstützen, wobei die besagte Vorrichtung dadurch gekennzeichnet ist, dass der jeweilige vorgenannte Rahmen (24) Leisten (25) umfasst, welche sich von einer zu der anderen Seite desselben im rechten Winkel zu den Leisten (23) der Rahmen (3) der Fraktionierkammer oder -kammern ($C_1$, $C_2$...) erstrecken, um gegenüber den entsprechenden Räumen der besagten Kammern längliche Räume zu bilden, wobei der besagte Rahmen (24) durch Einspeisemittel (27) durchbrochen ist, um in diese Räume Zusatzlösung nebeneinander einzuspeisen, und durch Entleermittel (26), um die Lösung nach Umlauf durch die besagten Räume nebeneinander zu entleeren.

8. Verfahren zur Fraktionierung durch Elektrophorese mittels einer Vorrichtung gemäss Anspruch 1 zur Durchführung einer Fraktionierung von Stoffen vorbestimmter Natur mit vorbestimmter Zuflussgeschwindigkeit und vorbestimmten Abflussgeschwindigkeiten, dadurch gekennzeichnet, dass die Stärke des jeweiligen Rahmens (3) und seiner Leisten (23) ungefähr gleich der Optimalstärke $e_c$ gewählt wird, welche dem Höchstwert des Abscheidefaktors für die fraglichen Stoffe und Strömmungsgeschwindigkeiten entspricht.

Fig. 1

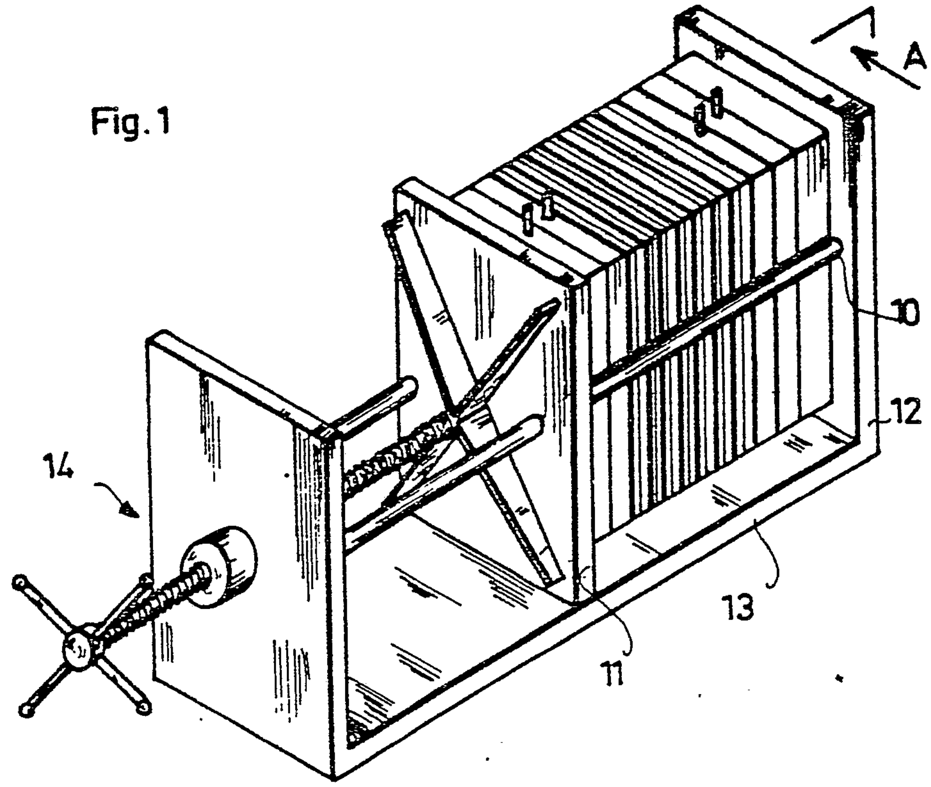


Fig. 2

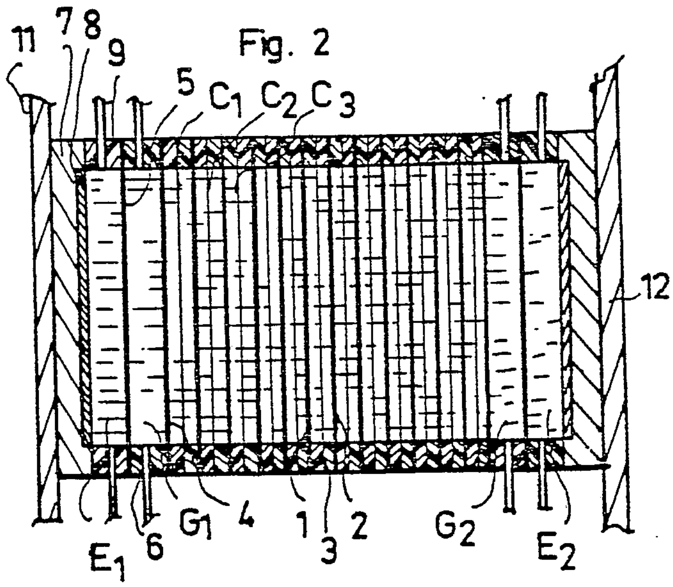

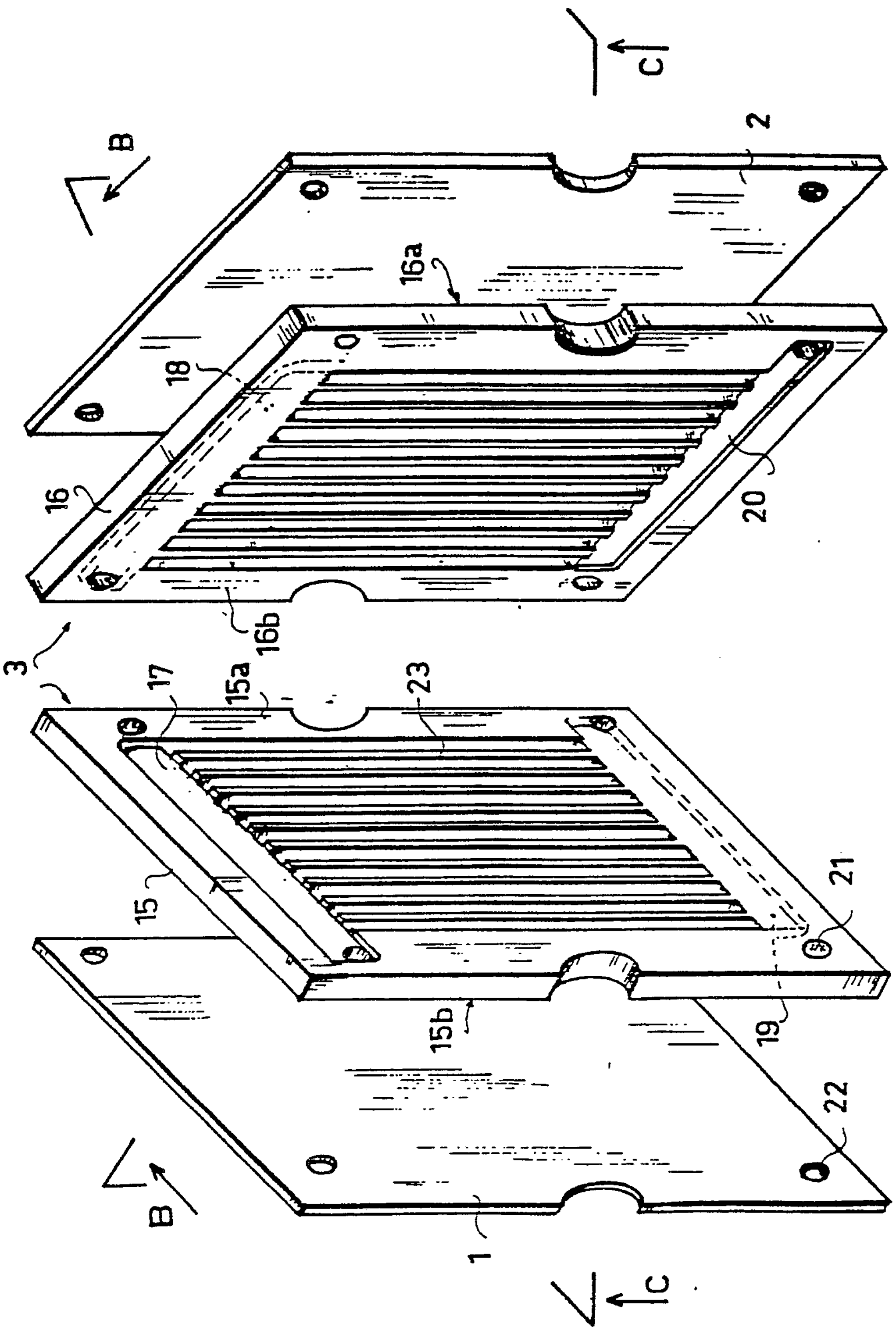


Fig. 3

Fig.4

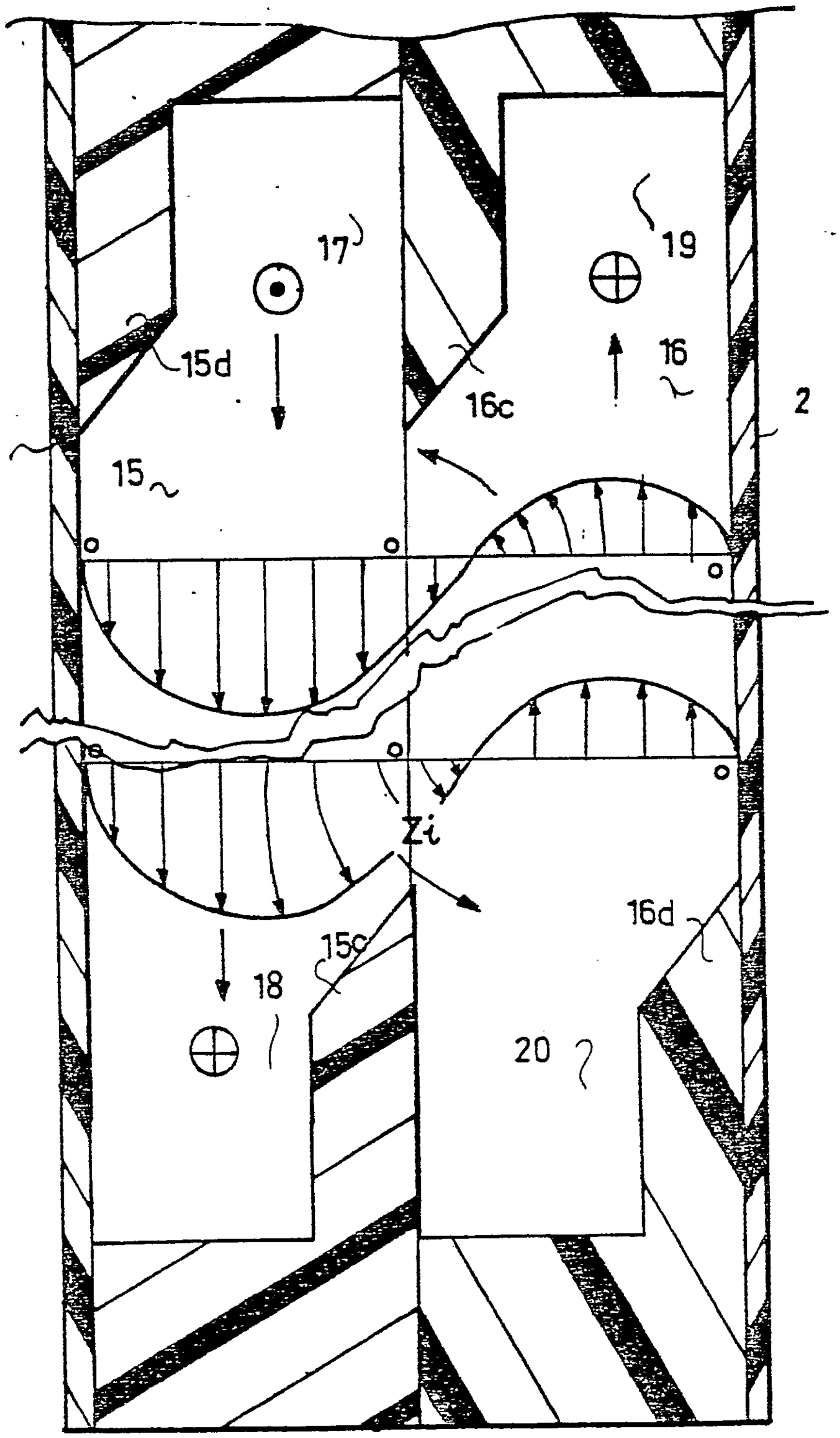

Fig. 5

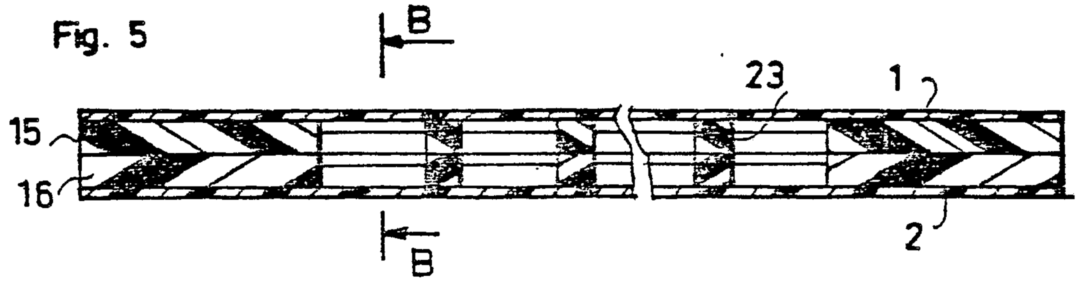


Fig. 6

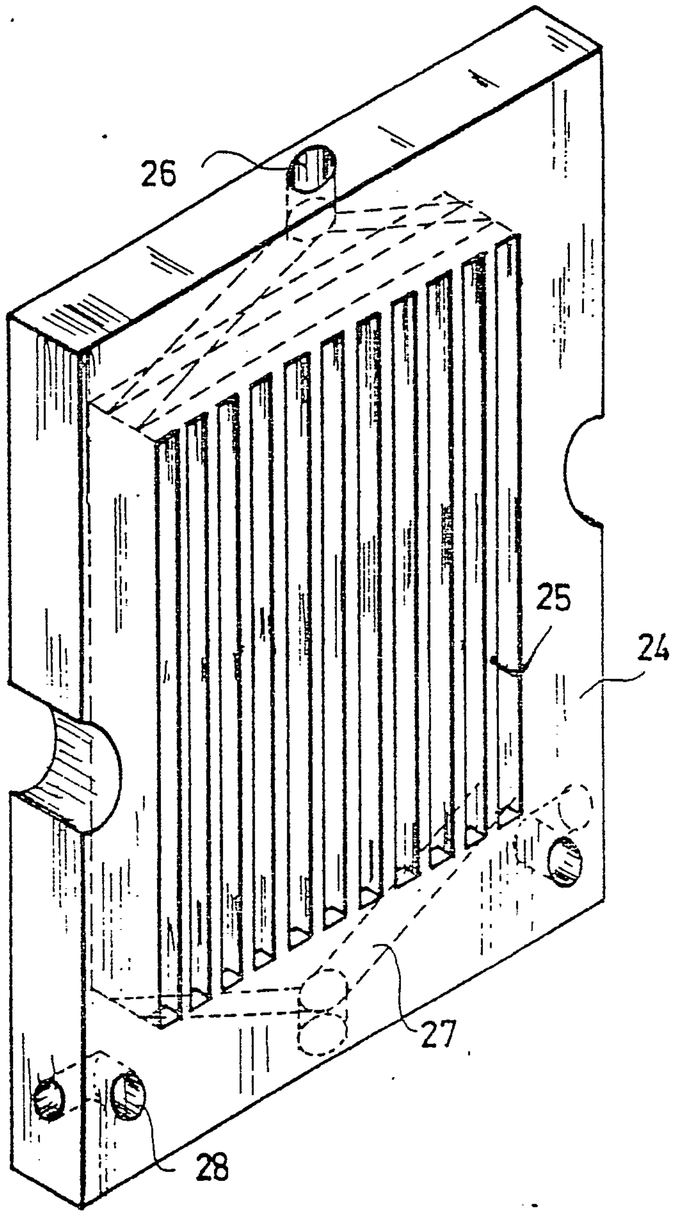

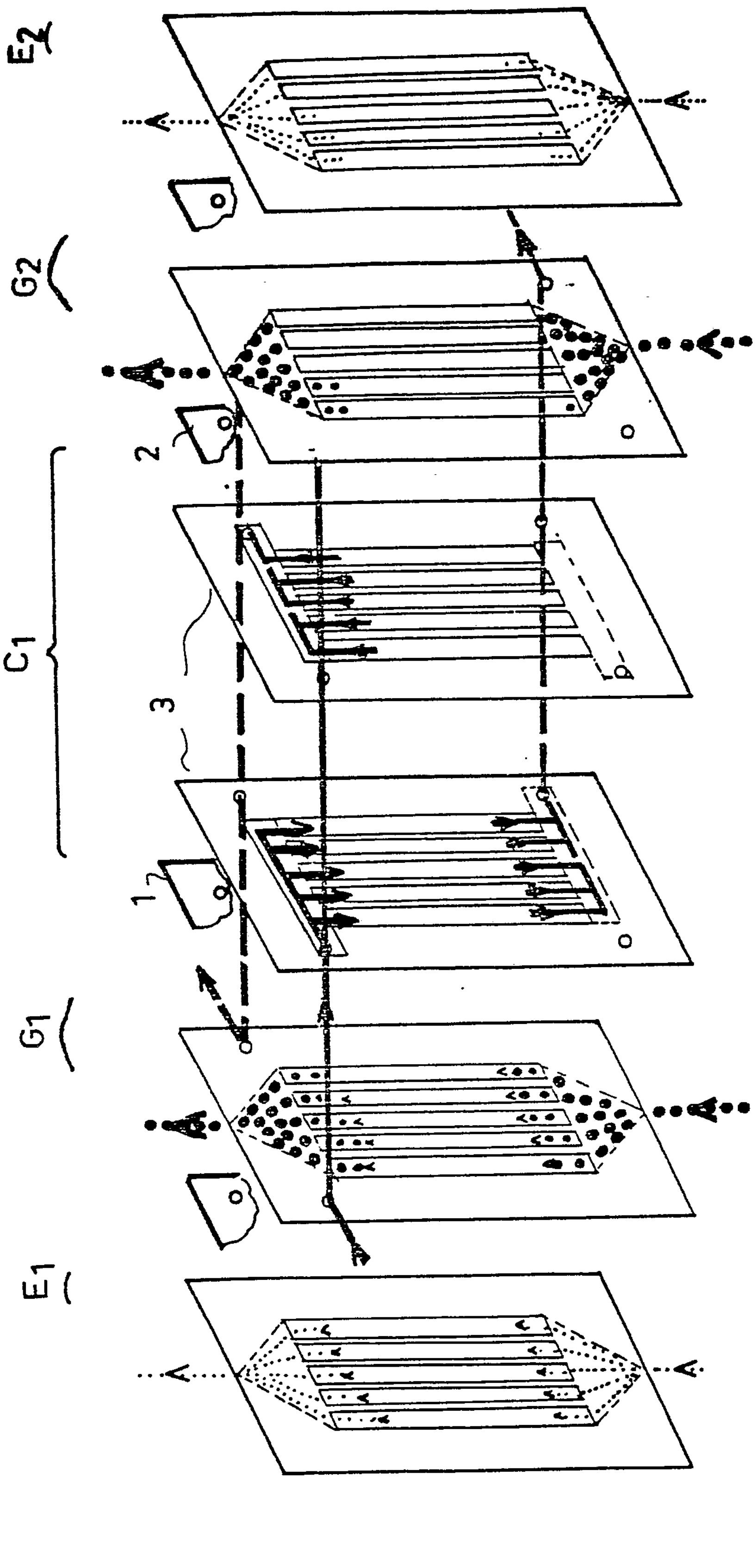


Fig. 7

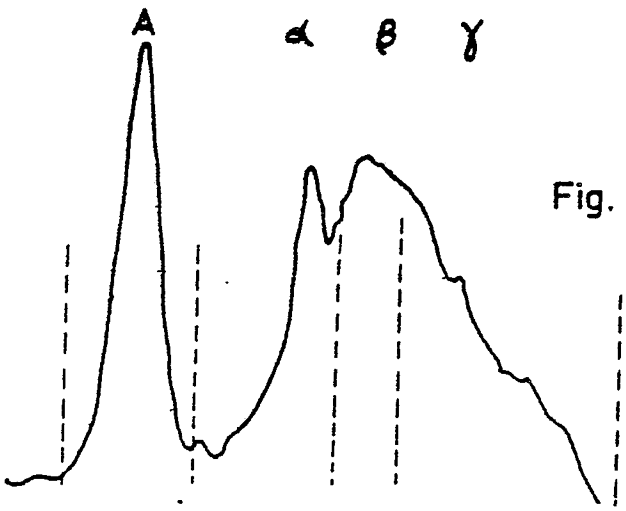


Fig. 8

Fig. 9

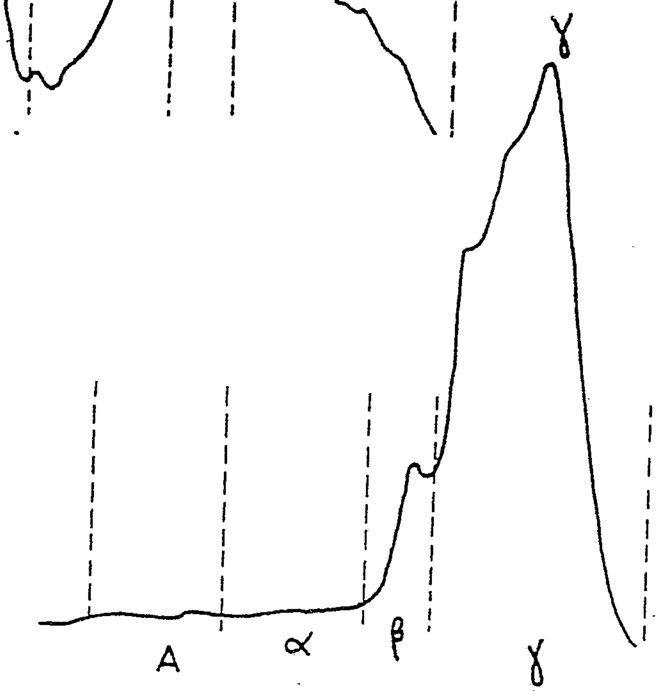


Fig.10

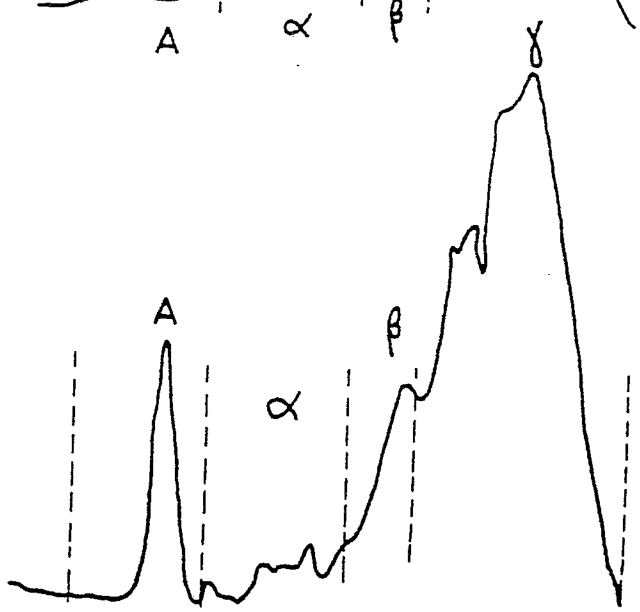

Fig.11

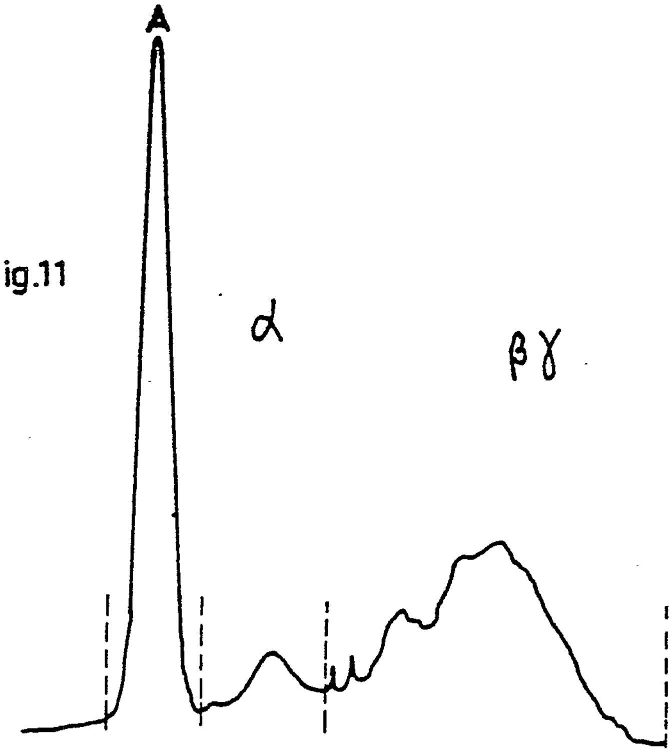


Fig.12

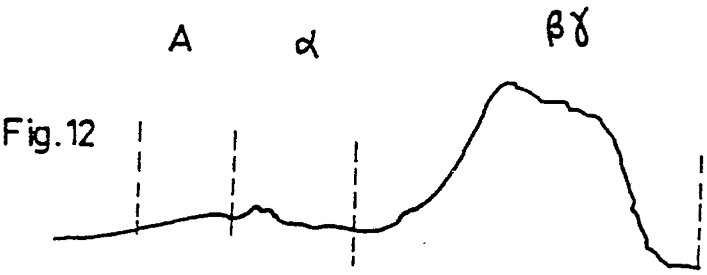


Fig.13

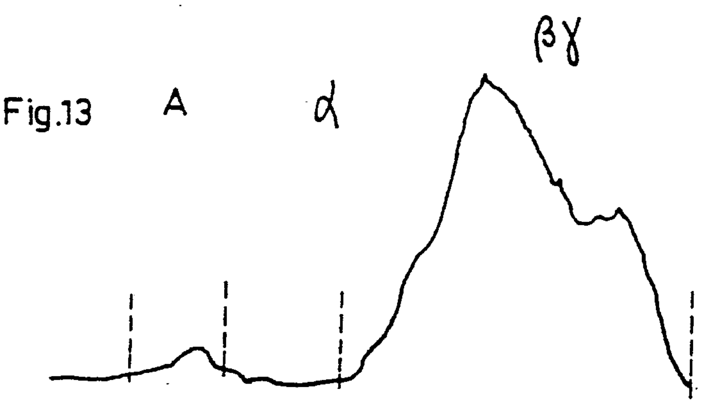

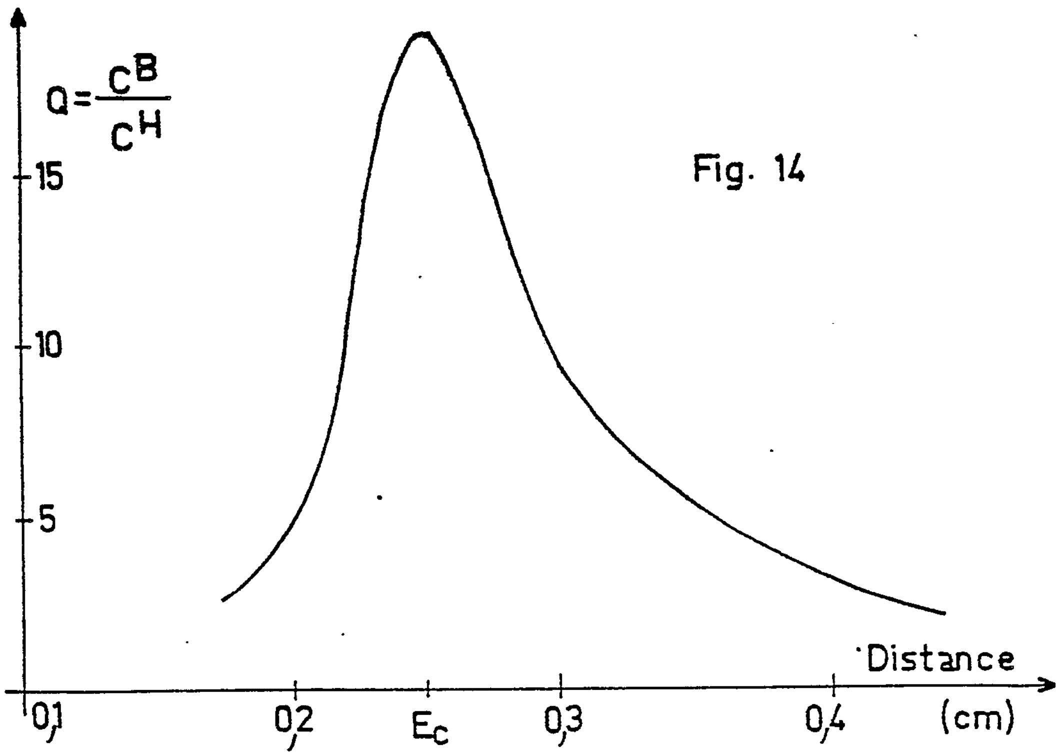

Q = C^B / C^H
15
10
5
Distance
0,1
0,2
Ec
0,3
0,4
(cm)


Fig. 14

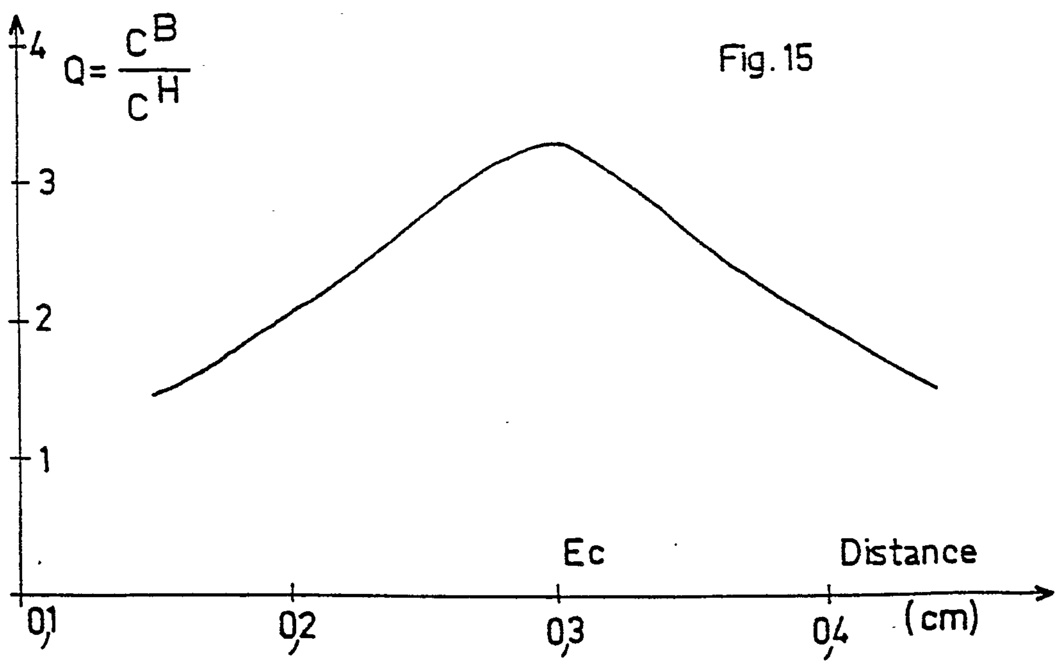

4
Q = C^B / C^H
3
2
1
Ec
Distance
0,1
0,2
0,3
0,4
(cm)


Fig. 15